Europäisches Patentamt

European Patent Office

Office européen des brevets

(11) Veröffentlichungsnummer: **0 417 853 A2**

# (12) EUROPÄISCHE PATENTANMELDUNG

(21) Anmeldenummer: 90202395.1

(22) Anmeldetag: 10.09.90

(51) Int. Cl.5: **H04L 7/027**

(30) Priorität: 14.09.89 DE 3930751

(43) Veröffentlichungstag der Anmeldung:
20.03.91 Patentblatt 91/12

(84) Benannte Vertragsstaaten:
**CH DE FR GB IT LI NL**

(71) Anmelder: **Philips Patentverwaltung GmbH
Wendenstrasse 35 Postfach 10 51 49
W-2000 Hamburg 1(DE)**
(84) **DE**

Anmelder: **N.V. Philips' Gloeilampenfabrieken**

Groenewoudseweg 1
NL-5621 BA Eindhoven(NL)
(84) **CH FR GB IT LI NL**

(72) Erfinder: **Schemmel, Hans-Robert, Dipl.-Ing.
Friedrichstrasse 49
W-8500 Nürnberg(DE)**

(74) Vertreter: **Peuckert, Hermann, Dipl.-Ing. et al
Philips Patentverwaltung GmbH
Wendenstrasse 35 Postfach 10 51 49
W-2000 Hamburg 1(DE)**

(54) **Schaltungsanordnung zur Taktrückgewinnung.**

(57) 2.1. Die Erfindung betrifft eine Schaltungsanordnung zur Rückgewinnung einer Taktfrequenz. Die Schaltungsanordnung soll auf einfache und kostengünstige Weise die Rückgewinnung der Taktfrequenz ermöglichen.

2.2. Es wird vorgeschlagen, daß zur wahlweisen Gewinnung der Taktfrequenz aus einem Datensignal oder einem Taktsignal ein aus einer Wicklung eines Transformators und mindestens einem parallel zu dieser liegender Kondensator gebildeter Schwingkreis vorgesehen ist, der wahlweise mit einem Frequenzumsetzer, der eine einer Spektrallinie entsprechende Frequenz des Datensignals in die Taktfrequenz umsetzt, oder einem ersten Taktteiler verbunden ist, der die Frequenz des Taktsignals in die Taktfrequenz umsetzt.

2.3. Taktversorgungseinrichtungen der Nachrichten- und Datentechnik.

FIG.1

Die Erfindung betrifft eine Schaltungsanordnung zur Rückgewinnung einer Taktfrequenz.

Eine derartige Schaltungsanordnung wird beispielsweise bei Taktversorgungseinrichtungen für digitale Übertragungsnetze der Nachrichten- und Datentechnik benötigt, wenn aus einem digitalen Eingangssignal eine benötigte Taktfrequenz regeneriert werden soll. Bei einem digitalen Übertragungsnetz gemäß 703 (CCITT = Comite Consultatif International Telegraphique et Telephonique) ist zur Rückgewinnung der Taktfrequenz ein 64 Kbit/s Datensignal oder ein 64 KHz Taktsignal verwendbar. Wird das Taktsignal zur Rückgewinnung der Taktfrequenz verwendet, so ist die Frequenz des Taktsignals in die gewünschte Taktfrequenz beispielsweise mit Hilfe eines Taktteilers umsetzbar. Soll das Datensignal für die Rückgewinnung der Taktfrequenz verwendet werden, so ist zu berücksichtigen, daß in dem Datensignal häufig die gewünschte Taktfrequenz nicht enthalten ist. Ein Datensignal nach G 703 (CCITT) beispielsweise ist als ternäres Datensignal ausgebildet, das auf einer in fünf Schritten ausgeführten Codierung eines binären Informationssignals basiert. In diesem Fall können zur Rückgewinnung der Taktfrequenz aus dem ternären Datensignal integrierte Schaltkreise eingesetzt werden, die auf einer Rückcodierung der genannten Codeumwandlung basieren. Diese Schaltkreise stellen jedoch einen erheblichen Kostenfaktor dar.

Der Erfindung liegt die Aufgabe zugrunde, eine Schaltungsanordnung der eingangs genannten Art anzugeben, die auf einfache und kostengünstige Weise die Rückgewinnung der Taktfrequenz ermöglicht.

Diese Aufgabe wird bei einer Schaltungsanordnung der eingangs genannten Art dadurch gelöst, daß zur wahlweisen Gewinnung der Taktfrequenz aus einem Datensignal oder einem Taktsignal ein aus einer Wicklung eines Transformators und mindestens einem parallel zu dieser liegenden Kondensator gebildeter Schwingkreis vorgesehen ist, der wahlweise mit einem Frequenzumsetzer, der eine einer Spektrallinie entsprechende Frequenz des Datensignals in die Taktfrequenz umsetzt, oder einem ersten Taktteiler verbunden ist, der die Frequenz des Taktsignals in die Taktfrequenz umsetzt.

Damit erlaubt die Schaltungsanordnung zur Taktrückgewinnung bei geringem Bauteileaufwand das wahlweise Einspeisen eines Taktsignals oder eines Datensignals, wobei am Ausgang der Schaltungsanordnung jeweils ein Ausgangssignal mit gleicher Taktfrequenz anliegt.

Vorteilhafte Ausgestaltungsformen sind in den Unteransprüchen enthalten.

Im folgenden wird die Erfindung anhand der in den Figuren dargestellten Ausführungsbeispiele näher erläutert.

Fig. 1 zeigt ein Ausführungsbeispiel einer Schaltungsanordnung zur Taktrückgewinnung.

Fig. 2 zeigt Amplitudenspektren von drei 64 kbit/s-Datensignalen.

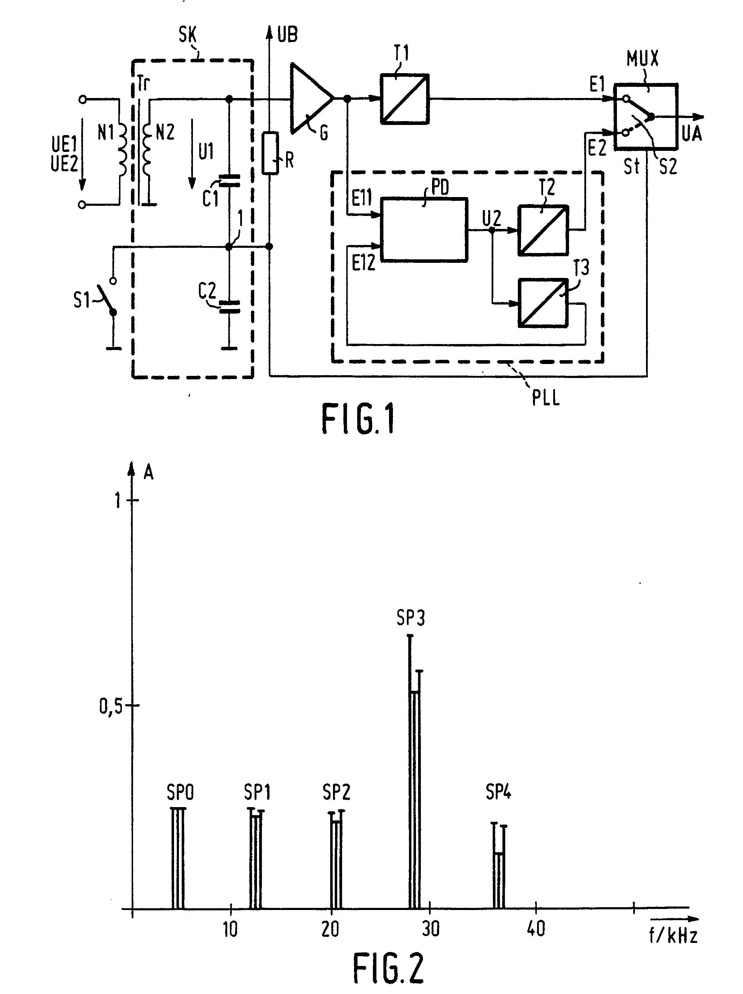

Bei dem in Fig. 1 gezeigten Ausführungsbeispiel einer Schaltungsanordnung zur Taktrückgewinnung liegt parallel zu den Klemmen einer Primärwicklung N1 eines Transformators Tr als Eingangssignal eines der beiden Signale UE1, UE2. Parallel zu den Anschlüssen einer an einem Bezugspotential (Masse) liegenden Sekundärwicklung N2 ist eine Reihenschaltung aus einem ersten Kondensator C1 und einem an Masse liegenden zweiten Kondensator C2 angeordnet, an der ein Schwingkreissignal U1 anliegt. Der Kondensator C2 ist durch einen Schalter S1 überbrückbar. Aus der Sekundärwicklung N2 des Transformators Tr sowie den Kondensatoren C1, C2 wird somit ein Schwingkreis SK gebildet, der jeweils auf die Signale UE1 bzw. UE2 abgestimmt ist. Ein gemeinsamer Verbindungspunkt 1 der Kondensatoren C1, C2 ist mit einem Steuereingang St, einer Umschalteinrichtung MUX und über einen Widerstand R mit dem positiven Pol einer Spannungsquelle UB verbunden. Das Schwingkreissignal U1 wird dem Eingang eines Gatters G zugeführt, dessen Ausgang über einen ersten Taktteiler T1 mit einem ersten Eingang E1 der Umschalteinrichtung MUX und über einen Frequenzumsetzer PLL mit einem zweiten Eingang E2 der Umschalteinrichtung MUX verbunden ist. Der Frequenzumsetzer PLL setzt eine einer der Spektrallinie SPO...SPN des Signals UE1 entsprechende Frequenz auf ein ganzzahliges Vielfaches der Taktfrequenz UA am Ausgang der Umschalteinrichtung MUX um. Der Frequenzumsetzer PLL weist einen Phasenvergleicher PD mit zwei Eingängen E11, E12 und einem Ausgang U2 auf. Dem ersten Eingang E11 wird das Schwingkreissignal U1 zugeführt. Der Ausgang U2 des Phasenvergleichers PD wird über einen dritten Taktteiler T3 auf den zweiten Eingang E12 des Phasenvergleichers PD zurückgeführt. Dem Phasenvergleicher PD des Frequenzumsetzers PLL ist ein zweiter Taktteiler T2 nachgeschaltet, dessen Ausgang mit dem zweiten Eingang E2 der Umschalteinrichtung verbunden ist und der die gewünschte Taktfrequenz UA liefert. Die Umschalteinrichtung MUX schaltet einen Schalter S2 zwischen den zwei Eingängen E1, E2 um. Der Schalter S1 ist über einen Steuereingang St mit dem Schalter S2 der Umschalteinrichtung MUX verbunden. Durch die vom Schalter S1 gesteuerte Umschalteinrichtung MUX ist entsprechend der Schalterstellung der Schalter S1, S2 entweder das vom ersten Taktteiler T1 oder vom zweiten Taktteiler T2 gelieferte Signal schaltbar.

Bei einer praktisch ausgeführten Schaltungsanordnung zur Taktrückgewinnung liegt als Eingangssignal wahlweise ein 64 kbit/s-Datensignal (UE1) nach G 703 (CCITT) oder ein Taktsignal (UE2) mit einer Taktfrequenz von 64 kHz an. Die gewünschte Taktfrequenz UA soll in beiden Fällen 32 KHz betragen.

Liegt als Eingangssignal ein 64 kbit/s-Datensignal (UEI) nach G 703 (CCITT) an, so wird der Kondensator C2 durch Schließen des Schalters S1 kurzgeschlossen und der Schwingkreis SK auf eine Spektrallinie SPO...SPN des Datensignals UE1, beispielsweise auf 28 kHz, abgestimmt, die vom Dateninhalt weitgehend unabhängig ist (siehe Fig. 2). Dadurch wird auch der Ausgang der Umschalteinrichtung MUX auf den zweiten Eingang E2 der Umschalteinrichtung MUX geschaltet. Damit wird das Schwingkreissignal U1 über das Gatter G und den Frequenzumsetzer PLL auf den Eingang E2 der beispielsweise als Multiplexer ausgebildeten Umschalteinrichtung MUX geschaltet. Bei der praktisch ausgeführten Schaltungsanordnung beträgt der Faktor des dritten Taktteilers T3 8, der Faktor des zweiten Taktteilers T2 1/7. Als Frequenz des Ausgangssignals ergeben sich durch die Multiplikation der Faktoren 1/7, 8 der Taktteiler T2, T3 mit der Frequenz des Signals U1 (28 kHz) somit als Taktfrequenz des Ausgangssignals UA bei der praktisch ausgeführten Schaltungsanordnung gewünschte 32 kHz.

Ist der Schalter S1 geöffnet, so ist der Schwingkreis SK durch die Reihenschaltung der entsprechend dimensionierten Kondensatoren C1, C2 jedoch auf ein Eingangssignal UE2 mit einer Taktfrequenz von 64 kHz abgestimmt. Über den mit der Klemme 1 des Schalters S1 verbundenen Steuereingang St der Umschalteinrichtung MUX wird das über den Schwingkreis SK selektierte Schwingkreissignal U1 nach dem Durchlaufen des Gatters G und des ersten Taktteilers T1, der bei der praktisch ausgeführten Schaltungsanordnung den Faktor 1/2 aufweist, auf den ersten Eingang E1 des Multiplexers MUX geschaltet. Das Ausgangssignal UA weist somit wieder eine Taktfrequenz von gewünschten 32 kHz auf.

Die gezeigte Schaltungsanordnung ermöglicht somit auf einfache Weise die Taktrückgewinnung aus einem Datensignal, insbesondere einem 64 kBit/s-Datensignal nach G 703 (CCITT) obwohl in dem Datensignal eine Taktfrequenz von 64 kHz nicht unmittelbar enthalten ist. Dabei ist die Phase des Signals mit der Taktfrequenz UA nahezu unabhängig vom Bitmuster des Datensignals UE2. Dadurch kann auf eine kostenaufwendige Rückcodierung des Datensignals durch integrierte Schaltkreise verzichtet werden. Darüber hinaus wird mit der in der Fig. 1 dargestellten Schaltungsanordnung zusätzlich das Einspeisen eines anderen Eingangssignals, beispielsweise eines 64 kHz-Taktsignals, möglich, wobei jeweils der gleiche umschaltbare Schwingkreis SK verwendet wird. Diese Bauteilereduzierung führt auch zu einer Kosteneinsparung.

Bei dem in Fig. 1 dargestellten Ausführungsbeispiel erfolgt die Betätigung des Schalters S1 von Hand. Bei einer vorteilhaften Ausgestaltungsform ist eine Erkennungsschaltung vorgesehen, die die Schalter S1, S2 abhängig vom jeweils anliegenden Eingangssignal UE1 oder UE2 entsprechend umschaltet.

Fig. 2 zeigt die Amplitudenspektren von drei ternären 64 kBit/s-Datensignalen nach G 703 (CCITT), d.h. die Amplitude A als Funktion der Frequenz f. Den Amplitudenspektren wurden dabei als Beispielsignale jeweils drei 64 kBit/s-Datensignale zugrundegelegt. Das erste und zweite Beispielsignal basiert dabei jeweils auf einem binären Datensignal, das konstant den Wert Null bzw. Eins aufweist, während das dritte Beispielsignal auf einem binären Datensignal basiert, das einen Null/Eins-Wechsel aufweist. Die Amplitudenspektren dieser drei Beispielsignale weisen jeweils Spektrallinien SP0, SP1, SP2, SP3, SP4 auf, mit entsprechenden Frequenzen von $(4 + n \cdot 8)$ kHz, wobei n ganzzahlig (hier: 0 bis 4) ist. Die Amplituden der sich daraus ergebenden Spektrallinien der Frequenzen 4, 12, 20, 28, 36 kHz sind nahezu unabhängig vom Dateninhalt, d.h. sie sind für die drei Beispielsignale nahezu konstant. Steuert entsprechend einer praktisch ausgeführten Schaltungsanordnung die Spektrallinie SP3 mit einer Frequenz von 28 kHz den schwingkreis SK, so erhält man unabhängig vom Dateninhalt des Datensignals UE1 mit Hilfe des nachgeschalteten entsprechend dimensionierten Frequenzumsetzers PLL ein Ausgangssignal UA mit einer Taktfrequenz von 32 kHz, wobei vollständig auf eine kostenaufwendige Rückcodierung des Datensignals UE1 durch integrierte Schaltkreise verzichtet wird.

## Ansprüche

1. Schaltungsanordnung zur Rückgewinnung einer Taktfrequenz,
dadurch gekennzeichnet ,
daß zur wahlweisen Gewinnung der Taktfrequenz (UA) aus einem Datensignal (UE1) oder einem Taktsignal (UE2) ein aus einer Wicklung (N2) eines Transformators (Tr) und mindestens einem parallel zu dieser liegenden Kondensator (C1, C2) gebildeter Schwingkreis (SK) vorgesehen ist, der wahlweise mit einem Frequenzumsetzer (PLL), der eine einer Spektrallinie (SPO...SPN) entsprechende Frequenz des Datensignals (UE1) in die Taktfrequenz (UA) umsetzt, oder einem ersten Taktteiler (T1) verbunden ist, der die Frequenz des Taktsignals (UE2) in die Taktfrequenz (UA) umsetzt.
2. Schaltungsanordnung nach Anspruch 1,
dadurch gekennzeichnet ,

daß das Eingangssignal (UE1, UE2) gemäß G 703 (CCITT) ausgebildet ist, wobei entweder das Datensignal (UE1) oder das Taktsignal (UE2) zur Rückgewinnung der Taktfrequenz (UA) verwendet wird.

3. Schaltungsanordnung nach einem der Ansprüche 1 oder 2,
dadurch gekennzeichnet ,
daß der Frequenzumsetzer (PLL) einen Phasenvergleicher (PD) mit zwei Eingängen (E11, E12) und einen Ausgang (U2) aufweist, wobei dem ersten Eingang (E1) ein am Schwingkreis (SK) anliegendes Schwingkreissignal (U1) zugeführt wird, der Ausgang (U2) über einen dritten Taktteiler (T3) auf den zweiten Eingang (E12) zurückgeführt wird und dem Phasenvergleicher (PD) ein zweiter Taktteiler (T2) nachgeschaltet ist, der die Taktfrequenz (UA) liefert.

4. Schaltungsanordnung nach Anspruch 3,
dadurch gekennzeichnet ,
daß eine Umschalteinrichtung (MUX) mit zwei Eingängen (E1, E2) vorgesehen ist, wobei der eine Eingang (E1) mit dem Ausgang des ersten Taktteilers (T1) und der zweite Eingang (E2) mit dem Ausgang des zweiten Taktteilers (T2) verbunden ist.

5. Schaltungsanordnung nach einem der Ansprüche 1 bis 4,
dadurch gekennzeichnet,
daß zur Rückgewinnung der Taktfrequenz (UA) aus dem Taktsignal (UE2) mittels eines Schalters (S1) der zweite Kondensator (C2) überbrückbar ist.

6. Schaltungsanordnung nach einem der Ansprüche 4 oder 5,
dadurch gekennzeichnet ,
daß die umschalteinrichtung (MUX) vom Schalter (51) gesteuert ist.

FIG.1

FIG.2

PHD 89-163